# EUROPEAN PATENT APPLICATION

(11) **EP 4 822 494 A1**
(43) Date of publication of application: **14.10.2026**
(21) Application number: 25214815.0
(22) Date of filing: 11.11.2025
(51) Int. Cl.: G06F 3/01, G06F 3/0487, G06F 3/0488, G06F 3/04883, G06F 3/0489, G06F 1/16, G06F 40/279

(54) **INTERACTION METHOD, APPARATUS, DEVICE, AND MEDIUM**

(30) Priority: 09.04.2025 CN 202510443480
(71) Applicant: Beijing Zitiao Network Technology Co., Ltd., Beijing 100190 (CN)
(72) Inventor: JIA, Xuewei, Beijing, 100028 (CN); LIU, Shuo, Beijing, 100028 (CN); LIU, Mengqian, Beijing, 100028 (CN); TAO, Xujie, Beijing, 100028 (CN); LIN, Jie, Beijing, 100028 (CN)
(74) Representative: Isarpatent

(57) **Abstract**

Embodiments of the present disclosure provide an interaction method, an apparatus, a device, and a medium. The method includes: determining, according to interaction data input by a user through a physical device, text information corresponding to the interaction data; acquiring response information corresponding to the text information; and outputting the response information. The present disclosure may increase the diversity and flexibility of interaction operations, meet the personalized interaction needs of the user, and improve the user experience.

## Description

### CROSS-REFERENCE TO RELATED APPLICATION

This application claims priority to Chinese Patent Application No. 202510443480.7, filed on April 9, 2025, the entire disclosure of which is incorporated herein by reference as part of the present disclosure.

### TECHNICAL FIELD

Embodiments of the present disclosure relate to the technical field of human-computer interaction, and in particular, to a human-computer interaction method, an apparatus, a device, and a medium.

### BACKGROUND

With the continuous development of various physical devices such as smart home devices such as smart speakers and smart toys, the physical devices may provide people with various functions, bringing many conveniences to people's life and work. For example, a physical device may provide a human-computer interaction function to perform human-computer interaction with a user, so as to enhance the interaction between the user and the device and improve the interaction convenience.

However, when the user performs human-computer interaction with the physical device, the physical device provides limited interaction operations for the user, and there are interaction limitations, which cannot meet the personalized interaction needs of the user.

### SUMMARY

Embodiments of the present disclosure provide an interaction method, comprising: determining, according to interaction data input by a user through a physical device, text information corresponding to the interaction data; acquiring response information corresponding to the text information; and outputting the response information.

In at least an embodiment, the acquiring response information corresponding to the text information comprises: inputting the text information into a preset application to acquire, through the preset application, the response information corresponding to the text information.

In at least an embodiment, the acquiring, through the preset application, the response information corresponding to the text information comprises: performing, through the preset application, semantic analysis on the text information to generate the response information corresponding to the text information.

In at least an embodiment, the preset application comprises a plurality of sub-applications, and the inputting the text information into a preset application to acquire, through the preset application, the response information corresponding to the text information comprises: determining scene information corresponding to the text information; determining, according to the scene information corresponding to the text information, a target sub-application from the plurality of sub-applications; and inputting the text information into the target sub-application to acquire, through the target sub-application, the response information corresponding to the text information.

In at least an embodiment, the physical device is a wearable device, and the determining, according to interaction data input by the user through a physical device, text information corresponding to the interaction data comprises: determining, according to interaction data input by the user through the wearable device, the text information corresponding to the interaction data.

In at least an embodiment, the interaction data input by the user through the wearable device comprises at least one selected from the group consisting of: touch data, button data, pressure-sensitive data, and inertial measurement data.

In at least an embodiment, the interaction data input by the user through the wearable device does not comprise voice data.

In at least an embodiment, the wearable device is a ring.

In at least an embodiment, the wearable device comprises a speaker and a vibration motor, and the outputting the response information comprises: outputting the response information through the speaker of the wearable device; and/or outputting, through the vibration motor of the wearable device, a vibration signal corresponding to the response information.

In at least an embodiment, the method further comprises: generating a dialogue record according to the text information and the response information.

In at least an embodiment, the dialogue record is a partial dialogue segment in a multi-round dialogue record.

Embodiments of the present disclosure further provide an interaction apparatus, comprising: a text determination module, configured to determine, according to interaction data input by a user through a physical device, text information corresponding to the interaction data; an information acquisition module, configured to acquire response information corresponding to the text information; and an interaction response module, configured to output the response information.

Embodiments of the present disclosure further provide an electronic device, comprising: a processor and a memory. The memory is configured to store a computer program, and the processor is configured to execute the computer program stored in the memory to perform the method of any one of the above embodiments.

Embodiments of the present disclosure further provide a non-transitory computer-readable storage medium, configured to store a computer program, wherein the computer program, when executed by a processor, causes a computer to perform the method of any one of the above embodiments.

Embodiments of the present disclosure further provide a computer program product comprising program instructions, wherein the program instructions, when executed on an electronic device, cause the electronic device to perform the method of any one of the above embodiments.

### BRIEF DESCRIPTION OF DRAWINGS

In order to more clearly explain the technical solutions in the embodiments of the present disclosure, the drawings required to be used in the description of the embodiments will be briefly introduced below. Obviously, the drawings in the following description are only some embodiments of the present disclosure, and for those of ordinary skill in the art, other drawings may be obtained according to these drawings without paying creative efforts.
Fig. 1 is a flowchart of an interaction method provided by an embodiment of the present disclosure;
Fig. 2a is a schematic diagram of a setting page for a ring provided by an embodiment of the present disclosure;
Fig. 2b is a schematic diagram of a custom gesture setting interface provided by an embodiment of the present disclosure;
Fig. 2c is a schematic diagram of setting a custom gesture and an interaction instruction corresponding to the custom gesture provided by an embodiment of the present disclosure;
Fig. 2d is a schematic diagram of an interaction instruction editing interface provided by an embodiment of the present disclosure;
Fig. 2e is a schematic diagram of setting another interaction instruction corresponding to a custom gesture provided by an embodiment of the present disclosure;
Fig. 3 is a schematic structural diagram of a preset application provided by an embodiment of the present disclosure;
Fig. 4 is a flowchart of acquiring response information corresponding to text information provided by an embodiment of the present disclosure;
Fig. 5 is a schematic structural diagram of another preset application provided by an embodiment of the present disclosure;
Fig. 6 is a schematic block diagram of an interaction apparatus provided by an embodiment of the present disclosure; and
Fig. 7 is a schematic block diagram of an electronic device provided by an embodiment of the present disclosure.

### DETAILED DESCRIPTION OF EMBODIMENTS

The technical solutions in the embodiments of the present disclosure will be clearly and completely described below with reference to the drawings in the embodiments of the present disclosure. Obviously, the described embodiments are only a part of the embodiments of the present disclosure, and not all of the embodiments. All other embodiments obtained by those of ordinary skill in the art based on the embodiments in the present disclosure without creative efforts shall fall within the protection scope of the present disclosure.

It should be noted that the terms "first", "second", etc. in the description, claims and drawings of the present disclosure are used to distinguish similar objects, and are not necessarily used to describe a specific order or sequence. It should be understood that the data termed in such a way are interchangeable in proper circumstances so that the embodiments of the present disclosure described herein may be implemented in orders except those illustrated or described herein. In addition, the terms "include" and "have" and any variations thereof are intended to cover non-exclusive inclusion. For example, a process, method, system, product or server that includes a series of steps or units is not necessarily limited to those steps or units that are clearly listed, but may include other steps or units that are not clearly listed or are inherent to these processes, methods, products or devices.

In the embodiments of the present disclosure, words such as "exemplary" or "for example" are used to represent examples, illustrations or descriptions. Any embodiment or scheme described as "exemplary" or "for example" in the embodiments of the present disclosure should not be interpreted as being more preferred or more advantageous than other embodiments or schemes. Rather, the use of words such as "exemplary" or "for example" is intended to present relevant concepts in a specific way.

In the description of the embodiments of the present disclosure, unless otherwise stated, "a plurality of" refers to two or more, that is, at least two. "At least one" refers to one or more. "Any" refers to any one or any several.

As mentioned above, with the continuous development of various physical devices such as smart home devices such as smart speakers and smart toys, the physical devices may provide people with various functions, thereby bringing many conveniences to people's life and work. For example, a physical device may provide a human-computer interaction function to perform human-computer interaction with a user, so as to enhance the interaction between the user and the device and improve the interaction convenience. **In** the related art, when a user performs human-computer interaction with a physical device, the physical device perceives and recognizes interaction operation data input by the user based on a human-computer interaction function of the physical device, executes a corresponding operation based on a recognition result, and then generates a corresponding response result according to an execution result. However, the above human-computer interaction mode makes the interaction operations provided by the physical device limited, and there are interaction limitations, which cannot meet the personalized interaction needs of the user.

In view of the above technical problems, the present disclosure provides an interaction method, an apparatus, a device, a medium and a program product to solve the problem that the interaction operations provided by the current physical device for the user are limited, and there are interaction limitations, which cannot meet the personalized interaction needs of the user.

The technical solutions provided by the embodiments of the present disclosure are described in detail below through some embodiments. The embodiments described below may be combined with each other, and the same or similar concepts or processes may not be repeated in some embodiments.

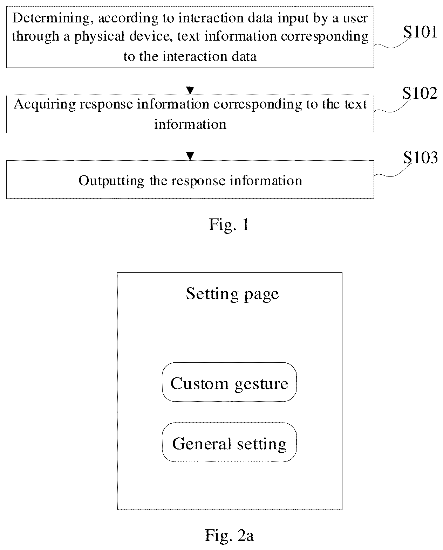

Fig. 1 is a flowchart of an interaction method provided by an embodiment of the present disclosure. The interaction method of this embodiment of the present disclosure may be executed by an interaction apparatus. The apparatus may be composed of hardware and/or software, and may be integrated in an electronic device having a display screen. In the present disclosure, the electronic device is optionally, but not limited to, a smart phone, smart glasses, a tablet computer, etc., and the type of the electronic device is not limited here.

As shown in Fig. 1, the method may include the following steps:
S101, determining, according to interaction data input by a user through a physical device, text information corresponding to the interaction data.

In the present disclosure, the physical device may be a smart home device, such as a smart speaker, a smart refrigerator, a smart air purifier, a smart humidifier, etc.; or, the physical device may be a smart toy, such as an early education robot, a machine cat, a machine dog, etc.; or, the physical device may also be an electronic device including at least one of a physical button and a touch area, such as a vehicle-mounted device and a wearable device. It should be noted that the above types of physical devices are only used as examples, and are not used as specific limitations on the physical devices of the present disclosure.

When the physical device is a wearable device, the wearable device may be a ring, a headset, a necklace, or a bracelet, etc.

It should be understood that, in the present disclosure, when the wearable device is a ring, a headset, a necklace or a bracelet, etc., the ring is a smart ring integrated with functions such as health detection and mobile payment; the headset is a smart headset integrated with functions such as active noise reduction, spatial audio, health detection and posture correction; the necklace is a smart necklace integrated with functions such as health monitoring, emotional companionship, positioning and anti-lost; and the bracelet is a smart bracelet integrated with functions such as health monitoring and activity tracking.

In addition, in the present disclosure, the physical device may include at least one selected from the group consisting of a button, a touch area, a microphone, a speaker, an inertial measurement sensor and a camera.

The above buttons may include physical buttons and pressure-sensitive buttons. The physical button realizes an input operation through a pressing action on a physical button, and the pressure-sensitive button collects input data through a pressure-sensitive sensor. In the present disclosure, the pressure-sensitive button may be arranged on the physical device in a physical button setting manner, or any sub-area in the touch area may be set as a pressure-sensitive area, and the pressure-sensitive area may be used as the pressure-sensitive button to realize the function of the pressure-sensitive button.

The above inertial measurement sensor may be called an inertial measurement unit (Inertial Measurement Unit, IMU).

Therefore, when the user performs human-computer interaction with the physical device, the user may interact with the physical device by pressing or clicking the button; or, the user may also interact with the physical device by performing a sliding operation on the touch area; or, the user may further interact with the physical device through a gesture; or, a microphone may collect an interaction voice input by the user to allow the user to interact with the physical device based on voice. The above button may be a physical button or a pressure-sensitive button arranged on the physical device.

Further, when the physical device detects interaction data input by the user, the physical device may send the interaction data input by the user to the electronic device through a communication connection between the physical device and the electronic device, so that the electronic device may determine corresponding text information based on the interaction data input by the user. The text information corresponding to each piece of interaction data is used for describing an interaction instruction corresponding to the interaction data, so as to understand and use the corresponding interaction instruction based on the text information.

In the present disclosure, when interacting with the physical device by pressing or clicking the button, the physical device may acquire button data or pressure-sensitive data input by the user through pressing or clicking the button; when interacting with the physical device by performing the sliding operation on the touch area, the physical device may acquire touch data of the user on the touch area; when interacting with the physical device through the gesture, the physical device may acquire at least one of inertial measurement data and hand image data for collecting gesture action data of the user, where the hand image data is collected by the camera; and when interacting with the physical device through voice, the physical device may collect interaction voice data input by the user through the microphone.

Moreover, the above button data or pressure-sensitive data may include, but is not limited to, a single press, a double press, a triple press and a long press.

The above touch data may include an up-sliding operation, a down-sliding operation, a left-sliding operation and a right-sliding operation.

The gesture action data corresponding to the above inertial measurement data and/or hand image data may include, but is not limited to, gesture action data of pinching once with two fingers, gesture action data of turning over the palm, and gesture action data of drawing a circle in the air with a finger.

That is, in the present disclosure, the interaction data input by the user through the physical device includes at least one selected from the group consisting of: touch data, button data, pressure-sensitive data, inertial measurement data, hand image data and voice data.

It should be understood that, the above interaction data input by the user through the physical device includes at least one selected from the group consisting of: touch data, button data, pressure-sensitive data, inertial measurement data, hand image data and voice data, which means that the interaction data input by the user through the physical device is at least one selected from the group consisting of: touch data, button data, pressure-sensitive data, inertial measurement data, hand image data and voice data.

Further, when receiving the interaction data input by the user through the physical device, the electronic device of the present disclosure may search for text information corresponding to the interaction data in a mapping relationship between preset interaction data and text information.

Exemplarily, the above mapping relationship between preset interaction data and text information may be shown in the following Table 1:

**Table 1**

| Interaction data | Text information |
|---|---|
| Single press | Answer a call or hang up a call. |
| Double press | Broadcast a current heart rate. |
| Triple press | Play audio content or pausing playing audio content. |
| Long press | Take a photo. |
| Up-sliding operation | Turn up audio volume. |
| Down-sliding operation | Turn down audio volume. |
| Palm-turning gesture | What time is it now? |
| ...... | ...... |
| Pinching twice with two fingers | What's the weather today? |

In some optional embodiments, the button in the physical device of the present disclosure may correspond to different triggering modes, optionally including, but not limited to, a single press, a double press, a triple press and a long press. Moreover, different triggering modes of the button may correspond to different interaction instructions, specifically the following cases:
Case 1: when the triggering mode of the button in the physical device is a single press, an interaction instruction corresponding to the single-press triggering mode may be answering a call or hanging up a call;
Case 2: when the triggering mode of the button in the physical device is a double press, an interaction instruction corresponding to the double-press triggering mode may be broadcasting a current heart rate;
Case 3: when the triggering mode of the button in the physical device is a triple press, an interaction instruction corresponding to the triple-press triggering mode may be playing audio content or pausing playing audio content; and
Case 4: when the triggering mode of the button in the physical device is a long press, an interaction instruction corresponding to the long-press triggering mode may be taking a photo.

The audio content may be music or a novel, which is not limited here.

It should be noted that the interaction instructions corresponding to different triggering modes of the button may be flexibly adjusted according to user needs, so as to meet personalized use needs of users. That is, when using the physical device, different users may customize the interaction instructions corresponding to different triggering modes of the button in the setting page for the physical device according to their own use needs.

In some embodiments, a sliding operation performed by the user on the touch area of the physical device may be, but is not limited to, an up-sliding operation, a down-sliding operation, a left-sliding operation and a right-sliding operation. Moreover, each of the above sliding operations also corresponds to different interaction instructions, specifically the following cases:
Case 1: when the user performs the up-sliding operation on the touch area, an interaction instruction corresponding to the up-sliding operation may be turning up audio volume;
Case 2: when the user performs the down-sliding operation on the touch area, an interaction instruction corresponding to the down-sliding operation may be turning down audio volume;
Case 3: when the user performs the left-sliding operation on the touch area, an interaction instruction corresponding to the left-sliding operation may be switching to a previous piece of audio content; and
Case 4: when the user performs the right-sliding operation on the touch area, an interaction instruction corresponding to the right-sliding operation may be switching to a next piece of audio content.

It should be noted that the interaction instructions corresponding to different sliding operations performed by the user on the touch area may also be flexibly adjusted according to user needs, so as to meet personalized use needs of users. That is, when using the physical device, different users may set different interaction instructions for each sliding operation on the touch area in the setting page for the physical device according to their own use needs, so as to realize the purpose of customizing the interaction instruction corresponding to each sliding operation on the touch area.

Moreover, the interaction instructions corresponding to different sliding operations performed by the user on the touch area are different from the interaction instructions corresponding to different triggering modes of the button by the user, so that misoperation caused by the same interaction instruction corresponding to different triggering modes may be avoided, and the human-computer interaction process may be simplified.

In some embodiments, when the user interacts with the physical device through a gesture, in the present disclosure, the gesture action data of the user may be collected by at least one of the inertial measurement sensor and the camera on the physical device, and the gesture action data may be expressed by inertial measurement data and/or hand image data, that is, when the user interacts with the physical device through the gesture, the gesture action data acquired by the physical device is the inertial measurement data and/or hand image data.

It should be noted that, in the present disclosure, the user may input a plurality of gestures, and each gesture may correspond to a different interaction instruction. For example, an interaction instruction corresponding to pinching twice with two fingers may be inquiring about the weather, etc.

Moreover, the interaction instruction corresponding to each gesture may also be flexibly adjusted according to user needs.

In addition, the user may also customize a gesture, and set a corresponding interaction instruction for the custom gesture and set corresponding text information for the interaction instruction, so that personalized needs of the user may be met, thereby improving the interaction convenience between the user and the physical device and improving the interaction efficiency.

Then, when the electronic device receives the interaction data input by the user through the physical device, the electronic device may recognize the interaction data, and then, according to a recognition result, search for an interaction instruction corresponding to the recognition result and text information corresponding to the interaction instruction in a mapping relationship between preset interaction data, instructions and text information.

**In** some optional embodiments, when recognizing the gesture action data collected by the inertial measurement sensor and/or the camera, the electronic device may recognize the gesture action data to obtain a gesture recognition result for the gesture input by the user. Then, an interaction instruction corresponding to the gesture recognition result is determined according to the gesture recognition result.

The determining an interaction instruction corresponding to the gesture recognition result may be determining a preset interaction instruction associated with the gesture recognition result, and then determining the preset interaction instruction as the interaction instruction corresponding to the gesture recognition result.

In the present disclosure, when recognizing the gesture action data, similarity between the gesture action data and each preset gesture in a pre-built gesture set may be calculated, and a preset gesture with the greatest similarity may be selected as the gesture recognition result; or, a gesture recognition model may also be used to process the gesture action data and output the gesture recognition result. The gesture recognition model may be any machine learning model that supports recognizing gestures based on gesture action data, and the model is not limited in the present disclosure.

Considering that the gesture action data collected by the inertial measurement sensor and/or the camera has interference such as noise, the electronic device, after receiving the gesture action data of the user collected by the inertial measurement sensor and/or the camera in the physical device, may first perform pre-processing operations such as denoising, filtering and feature extraction on the gesture action data to obtain more reliable and effective gesture action data. Then, a recognition operation is performed based on the pre-processed gesture action data. In this way, by pre-processing the gesture action data, noise and useless data in the gesture action data may be removed, so that the gesture action data is more authentic and reliable, thereby improving the quality of the gesture action data and providing conditions for the accuracy of gesture recognition.

In some embodiments, the mapping relationship between the preset interaction data, instructions and text information in the present disclosure may be shown in the following Table 2:

**Table 2**

| Interaction data | Instruction | Text information |
|---|---|---|
| Single press | Answer a call or hanging up a call. | Answer a call or hanging up a call. |
| Double press | Broadcast a current heart rate. | Broadcast a current heart rate. |
| Triple press | Play audio content or pause playing audio content. | Play audio content or pause playing audio content. |
| Long press | Take a photo. | Take a photo. |
| Up-sliding operation | Turn up audio volume. | Turn up audio volume. |
| Down-sliding operation | Turn down audio volume. | Turn down audio volume. |
| Palm-turning gesture | Inquire about the time. | What time is it now? |
| Pinching twice with two fingers | Inquire about the weather. | What's the weather today? |

Exemplarily, assuming the user interacts with the physical device by inputting a palm-turning gesture, the electronic device, after receiving the interaction data sent by the physical device, may first recognize palm-turning gesture action data input by the user to obtain a palm-turning gesture recognition result, and then, according to the palm-turning gesture recognition result, search for an interaction instruction "inquire about the time" corresponding to the palm-turning gesture recognition result and text information "what time is it now" corresponding to the interaction instruction "inquire about the time" in the mapping relationship between the preset interaction data, instructions and text information in Table 2.

S102: acquiring response information corresponding to the text information.

In the present disclosure, the response information refers to information that provides feedback or reply to the text information corresponding to the interaction data input by the user through the physical device. For example, assuming that the text information corresponding to the interaction data input by the user is "what is the weather today", the response information is specific weather information for replying to "what is the weather today".

In some optional embodiments, the electronic device of the present disclosure may determine whether a preset application is in a working state, and if it is determined that the preset application is in the working state, the text information corresponding to the interaction data may be input into the preset application in the working state, so as to acquire the response information corresponding to the text information through the preset application. If it is determined that the preset application is in a dormant state, the preset application is woken up to wake the preset application up from the dormant state to the working state, and then the text information corresponding to the interaction data is input into the preset application in the working state, so as to acquire the response information corresponding to the text information through the preset application.

In some embodiments, the acquiring, through a preset application, response information corresponding to the text information may be performing, through the preset application, semantic analysis on the text information to generate the response information corresponding to the text information.

Optionally, in the present disclosure, the semantic analysis is performed on the text information through the preset application to determine semantic information such as entities in the text information, relationships between the entities, and emotion, so that the preset application may understand the deep meaning corresponding to the text information. Further, the corresponding response information is generated through the preset application based on the deep meaning corresponding to the text information. The entities in the text information refer to information such as places and time. The emotion in the text information refers to the user's mood, such as positive, negative or neutral.

**In** some embodiments, the acquiring, through a preset application, response information corresponding to the text information may also be performing, through the preset application, semantic analysis on the text information to determine a user interaction intention, and then generating, through the preset application, the response information corresponding to the text information according to the user interaction intention.

Optionally, the performing, through a preset application, semantic analysis on the text information to determine a user interaction intention may be understanding, through the preset application, meanings expressed by words, phrases and sentences in the text information, and then determining, according to the meaning expressed by the text information, an intention of the user to input the text information, that is, determining the user interaction intention.

In some embodiments, the generating, through the preset application, the response information corresponding to the text information according to the user interaction intention may be determining, through the preset application, a response template for generating the response information according to the user interaction intention, and acquiring target information corresponding to the user interaction intention; and then, adjusting the target information according to the response template to obtain the response information corresponding to the text information.

The acquiring, through the preset application, target information corresponding to the user interaction intention according to the user interaction intention may be implemented through at least one of Internet and local data.

Exemplarily, assuming that the text information is "what is the weather today", the preset application may determine, according to the text information "what is the weather today", that the user interaction intention is to acquire today's weather information, and then the preset application may acquire, through Internet, the day's weather information "today is sunny, the temperature is -3 to 6 degrees, with light breeze, and it is cold in the morning and evening" of the location where the user is, and acquire a weather information response template. Then, the current weather information "today is sunny, the temperature is -3 to 6 degrees, with light breeze, and it is cold in the morning and evening" is adjusted according to the weather information response template to obtain response information "it is sunny today, the temperature is between -3 and 6 degrees, and the wind is not strong. But it is cold in the morning and evening, so it is best to wear thick cotton-padded clothes and scarves and gloves when going out, so that it is warm."

In the present disclosure, before performing the semantic analysis on the text information, the preset application may further perform text cleaning on the text information to remove irrelevant characters or punctuation marks in the text information, and remove stop words that are not helpful for understanding the text information, such as words like "is" and "of", so that the difficulty in processing the text information by the preset application may be reduced, the consumption of computing resources may be reduced, and the accuracy of the processing result may be improved.

In the present disclosure, the preset application may be an artificial intelligence (Artificial Intelligence, AI) application.

It should be understood that the AI application refers to an application developed using artificial intelligence technology.

Moreover, the AI application is optionally an entry to a large language model (Large Language Model, LLM) for processing language-related tasks, such as question answering and text generation, and the AI application is not specifically limited in the present disclosure.

The above large language model refers to a computer model with a large number of parameters and strong language generation and understanding capabilities.

S103: outputting the response information.

In some optional embodiments, the response information may be displayed through a display screen of the electronic device.

Considering that the physical device communicating with the electronic device may include a speaker, when outputting the response information, the response information generated by the preset application may be output through the speaker of the physical device to perform personalized interaction with the user.

That is, in the present disclosure, in addition to displaying the response information through the display screen of the electronic device, the response information may also be output through the speaker of the wearable device.

In the present disclosure, the response information corresponding to the text information is output through the above outputting manner, so that the response information corresponding to the interaction data may be output to the user through different output channels, and the interaction satisfaction of the user may be improved.

In some optional embodiments, considering that in the present disclosure, the interaction instruction may be determined according to the interaction data input by the user, before outputting the response information, an interaction operation corresponding to the interaction instruction may also be performed, so that a complex interaction scene may be supported, and the user may clearly understand the execution condition of the interaction instruction and the response information, thereby helping the user to better perform human-computer interaction with the physical device.

Exemplarily, assuming that the interaction instruction corresponding to the interaction data input by the user is "switch to the next audio", the electronic device may respond to the interaction instruction "switch to the next audio", perform an audio switching operation, and output response information "switched to the next audio" through the speaker of the physical device.

That is, the present disclosure may further include: performing, in response to the interaction instruction, an interaction operation corresponding to the interaction instruction, and outputting the response information.

In some optional embodiments, in the present disclosure, after obtaining the response information according to the text information, optionally, a dialogue record is generated according to the text information and the response information, and the dialogue record is stored in a dialogue record of the preset application, so that the interaction transparency between the user and the physical device may be enhanced, and when information traceability is required, the purpose of information traceability may be realized based on the dialogue record.

In some optional embodiments, in the present disclosure, the dialogue record generated according to the text information and the response information is a partial dialogue segment in a multi-round dialogue record, so that context may be provided for the multi-round dialogue, the multi-round dialogue may be made more coherent, and the efficiency and quality of the dialogue may also be improved.

According to the technical solution disclosed in the embodiments of the present disclosure, the text information corresponding to the interaction data is determined according to the interaction data input by the user through the physical device, the response information corresponding to the text information is acquired, and then the response information is output. In this way, the response information corresponding to the interaction data is output to the user based on the interaction data input by the user, so that the diversity and flexibility of interaction operations may be increased, the personalized interaction needs of the user may be met, and the user experience may be improved. Moreover, the text information corresponding to the interaction data is input into the preset application, so that the response information corresponding to the text information may be intelligently acquired through the preset application, thereby improving the intelligence degree of human-computer interaction and enhancing the effect of human-computer interaction.

In some optional embodiments, considering that the physical device may be a wearable device, when the wearable device is a ring, the ring may include a button, a touch area and an inertial measurement sensor. Therefore, in the present disclosure, the determining, according to interaction data input by a user through a physical device, text information corresponding to the interaction data specifically includes: determining, according to interaction data input by the user through the wearable device, the text information corresponding to the interaction data, where the wearable device is specifically the ring.

Optionally, when the user performs human-computer interaction with the ring and inputs interaction data through the ring, the user may interact with the ring by pressing or clicking the button; or, the user may also interact with the ring by performing a sliding operation on the touch area; or, the user may further interact with the ring through a gesture. The above button may be a physical button or a pressure-sensitive button arranged on the ring.

Further, when the ring detects the interaction data input by the user, the ring may send the interaction data input by the user to the electronic device through a communication connection between the ring and the electronic device, so that the electronic device determines the corresponding text information based on the interaction data input by the user.

In the present disclosure, when interacting with the ring by pressing or clicking the button, the ring may acquire button data or pressure-sensitive data of the button pressed or clicked by the user; when interacting with the ring by performing the sliding operation on the touch area, the ring may acquire touch data of the user on the touch area; and when interacting with the ring through the gesture, the ring may acquire inertial measurement data for collecting gesture action data of the user.

Moreover, the above button data or pressure-sensitive data may include, but is not limited to, a single press, a double press, a triple press and a long press.

The above touch data may include an up-sliding operation, a down-sliding operation, a left-sliding operation and a right-sliding operation.

The gesture action data corresponding to the above inertial measurement data may include, but is not limited to, gesture action data of pinching once with two fingers, gesture action data of turning over the palm, and gesture action data of drawing a circle in the air with a finger.

That is, in the present disclosure, the interaction data input by the user through the wearable device includes at least one of the following: touch data, button data, pressure-sensitive data and inertial measurement data.

It should be understood that, the above interaction data input by the user through the wearable device includes at least one of the following: touch data, button data, pressure-sensitive data and inertial measurement data, which means that the interaction data input by the user through the wearable device is at least one of touch data, button data, pressure-sensitive data and inertial measurement data.

In addition, in the present disclosure, the interaction data input by the user through the wearable device does not include voice data. That is, when the user interacts with the ring, the interaction mode of interacting with the ring through voice is not included.

Further, when receiving the interaction data input by the user through the ring, the electronic device may search for the text information corresponding to the interaction data in the mapping relationship between preset interaction data and text information.

In some optional embodiments, the button in the ring of the present disclosure may correspond to different triggering modes, optionally including, but not limited to, a single press, a double press, a triple press and a long press. Moreover, different triggering modes of the button may correspond to different interaction instructions, specifically the following cases:
Case 1: when the triggering mode of the button in the ring is a single press, an interaction instruction corresponding to the single-press triggering mode may be answering a call or hanging up a call;
Case 2: when the triggering mode of the button in the ring is a double press, an interaction instruction corresponding to the double-press triggering mode may be broadcasting a current heart rate;
Case 3: when the triggering mode of the button in the ring is a triple press, an interaction instruction corresponding to the triple-press triggering mode may be playing audio content or pausing playing audio content; and
Case 4: when the triggering mode of the button in the ring is a long press, an interaction instruction corresponding to the long-press triggering mode may be taking a photo.

The audio content may be music or a novel, which is not limited here.

It should be noted that the interaction instructions corresponding to different triggering modes of the button may be flexibly adjusted according to user needs, so as to meet personalized use needs of users. That is, when using the ring, different users may customize the interaction instructions corresponding to different triggering modes of the button in the setting page for the ring according to their own use needs.

In some embodiments, the user performing a sliding operation on the touch area in the present disclosure may be, but is not limited to, an up-sliding operation, a down-sliding operation, a left-sliding operation and a right-sliding operation. Moreover, each of the above sliding operations also corresponds to different interaction instructions, specifically the following cases:
Case 1: when the user performs the up-sliding operation on the touch area, an interaction instruction corresponding to the up-sliding operation may be turning up audio volume;
Case 2: when the user performs the down-sliding operation on the touch area, an interaction instruction corresponding to the down-sliding operation may be turning down audio volume;
Case 3: when the user performs the left-sliding operation on the touch area, an interaction instruction corresponding to the left-sliding operation may be switching to a previous piece of audio content; and
Case 4: when the user performs the right-sliding operation on the touch area, an interaction instruction corresponding to the right-sliding operation may be switching to a next piece of audio content.

It should be noted that the interaction instructions corresponding to different sliding operations performed by the user on the touch area may also be flexibly adjusted according to user needs, so as to meet personalized use needs of users. That is, when using the ring, different users may set different interaction instructions for each sliding operation on the touch area in the setting page for the ring according to their own use needs, so as to realize the purpose of customizing the interaction instruction corresponding to each sliding operation on the touch area.

Moreover, the interaction instructions corresponding to different sliding operations performed by the user on the touch area are different from the interaction instructions corresponding to different triggering modes of the button by the user, so that misoperation caused by the same interaction instruction corresponding to different triggering modes may be avoided, and the human-computer interaction process may be simplified.

**In** some embodiments, when the user interacts with the ring through a gesture, in the present disclosure, the gesture action data of the user may be collected by the inertial measurement sensor on the ring, and the gesture action data may be expressed by inertial measurement data, that is, when the user interacts with the ring through the gesture, the gesture action data acquired by the ring is the inertial measurement data.

It should be noted that the user may input a plurality of gestures, and each gesture may correspond to a different interaction instruction. Moreover, the interaction instruction corresponding to each gesture may also be flexibly adjusted according to user needs.

In addition, the user may also customize a gesture, and set a corresponding interaction instruction for the custom gesture and set corresponding text information for the interaction instruction, so that personalized needs of the user may be met, thereby improving the interaction convenience between the user and the ring and improving the interaction efficiency.

In the present disclosure, the above custom gesture may be, but is not limited to, a gesture of pinching once with two fingers, a fist-making gesture, a palm-turning gesture, a gesture of pinching twice with two fingers, and a gesture of drawing a circle in the air with a finger, etc.

For a pinching gesture with two fingers, since each user has different habits of wearing the ring, for example, a user A is used to wearing the ring on the index finger, and a user B is used to wearing the ring on the middle finger, etc., the pinching gesture with two fingers may be a pinching action between the finger wearing the ring in the user's real hand and any one of the remaining fingers. For example, assuming that the user wears the ring on the index finger of any real hand, the pinching gesture with two fingers may be a pinching action between the index finger and the thumb of the user's real hand.

In the following, the user customizing a gesture and setting a corresponding interaction instruction for the custom gesture will be described with reference to an example. For example, when the user needs to customize a gesture and set a corresponding interaction instruction for the custom gesture, the user may establish a communication connection between the ring and the electronic device, and the setting page for the ring may be displayed in the electronic device, as shown in Fig. 2a. The setting page of the ring includes a custom gesture option and a general setting option.

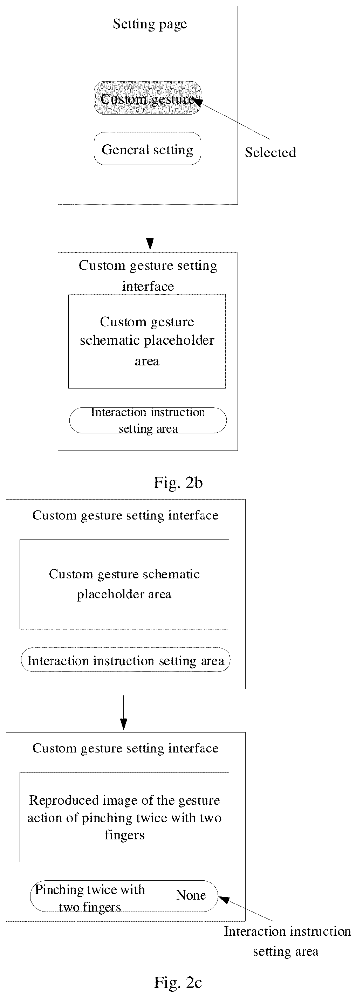

Further, the user may select the custom gesture option in the setting page of the ring to open the custom gesture setting interface, as shown in Fig. 2b. The custom gesture setting interface may include a custom gesture schematic placeholder area and an interaction instruction setting area corresponding to the custom gesture. Then, the user may perform the custom gesture, such as a gesture of pinching twice with two fingers, with the real hand, and after the inertial measurement sensor on the ring collects the gesture of pinching twice with two fingers, gesture action data of the gesture of pinching twice with two fingers may be sent to the electronic device through the communication connection between the ring and the electronic device, so that the electronic device reproduces the gesture in the custom gesture schematic placeholder area of the custom gesture setting interface according to the gesture action data of the gesture of pinching twice with two fingers sent by the ring. Moreover, identification information of the custom gesture is also displayed as "pinching twice with two fingers" in the interaction instruction setting area corresponding to the custom gesture, and the interaction instruction corresponding to the custom gesture of pinching twice with two fingers is displayed as "none", as shown in Fig. 2c.

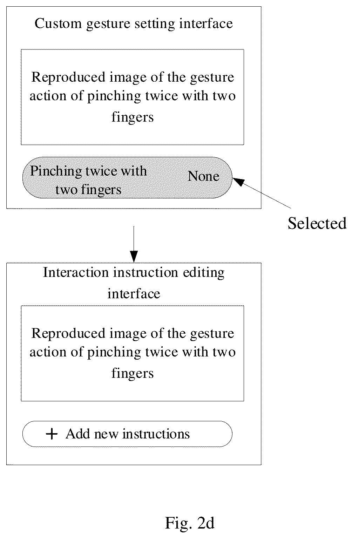

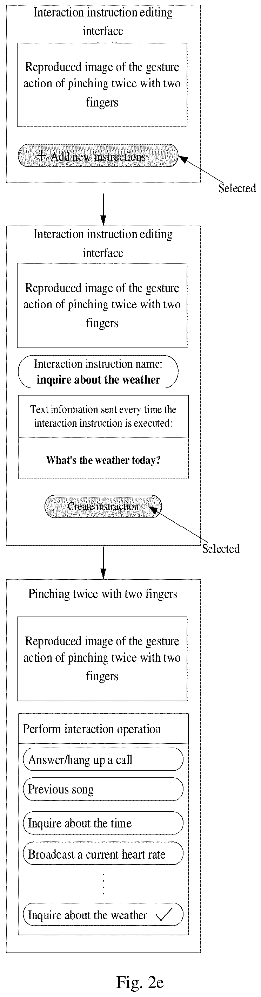

Then, the user may select the interaction instruction setting area in the custom gesture setting interface to switch the interaction instruction setting area from a non-editable state to an editable state, and enter the interaction instruction editing interface, as shown in Fig. 2d. Further, in the interaction instruction editing interface, the user may set a corresponding interaction instruction "inquiring about the weather" for the custom gesture "pinching twice with two fingers" input by the user displayed in the interaction instruction setting area in the editable state, and set text information "what's the weather today" corresponding to the interaction instruction "inquiring about the weather". After that, the create instruction control may be selected to realize the user customizing the gesture, and setting the corresponding interaction instruction for the custom gesture and setting the text information corresponding to the interaction instruction, as shown in Fig. 2e.

Further, when the electronic device receives the interaction data input by the user through the ring, the electronic device may recognize the interaction data, and then, according to a recognition result, search for an interaction instruction corresponding to the recognition result and text information corresponding to the interaction instruction in a mapping relationship between preset interaction data, instructions and text information.

For the specific implementation process of the above electronic device recognizing the interaction data, and then, according to the recognition result, searching for the interaction instruction corresponding to the recognition result and the text information corresponding to the interaction instruction in the mapping relationship between the preset interaction data, instructions and text information, reference may be made to the foregoing embodiments, which will not be repeated here.

After determining the text information corresponding to the interaction data, the electronic device of the present disclosure may acquire the response information corresponding to the text information and output the response information.

The implementation principle of acquiring the response information corresponding to the text information is the same or similar to the implementation principle of step S102 in the foregoing embodiments, and for the specific implementation process, reference may be made to the part of step S102 in the foregoing embodiments, which will not be repeated here.

In some embodiments, considering that the ring may further include a vibration motor in addition to the speaker, when outputting the response information, in addition to displaying the response information through the display screen of the electronic device and outputting the response information through the speaker of the ring, a vibration signal corresponding to the response information may also be obtained according to the response information generated by the preset application, and then the vibration signal corresponding to the response information is output through the vibration motor of the ring, so that the output diversity of the response information may be improved.

Optionally, in the present disclosure, the obtaining a vibration signal corresponding to response information according to response information generated by a preset application may be selecting a target vibration mode from a plurality of vibration modes according to the response information generated by the preset application. The plurality of vibration modes may include continuous vibration, single vibration, indirect vibration, and a combination of vibrations at different frequencies, etc. For example, when the response information is that a piece of audio content starts to be played, the target vibration mode may be selected as a continuous vibration mode; and when the response information is turning up the audio volume, the target vibration mode may be selected as a single vibration, etc.

Meanwhile, parameter information of the vibration signal corresponding to the response information may also be determined, such as amplitude, frequency and duration, etc. Then, a vibration signal generation tool is used to generate the vibration signal based on the vibration mode and the parameter information of the vibration signal. For example, when the response information is simple notification information, such as that the audio content has been switched, etc., lower parameters may be selected for the amplitude, frequency, duration, etc. of the vibration signal. When the response information is important notification information, such as answering a call, etc., higher parameters may be selected for the amplitude, frequency, duration, etc. of the vibration signal.

In some embodiments, when outputting the response signal in the present disclosure, the vibration signal corresponding to the response information may also be output through the vibration motor of the ring while outputting the response information generated by the preset application through the speaker of the ring, so that the speed of the user receiving the response information may be increased, and the response delay caused by waiting for the voice response information to be played may be reduced.

That is, in the present disclosure, in addition to displaying the response information through the display screen of the electronic device, outputting the response information may further include outputting the response information through the speaker of the wearable device; and/or outputting a vibration signal corresponding to the response information through the vibration motor of the wearable device.

In some optional embodiments, considering that in the present disclosure, the interaction instruction may be determined according to the interaction data input by the user, before outputting the response information, an interaction operation corresponding to the interaction instruction may also be performed, so that a complex interaction scene may be supported, and the user may clearly understand the execution condition of the interaction instruction and the response information, thereby helping the user to better perform human-computer interaction with the smart ring.

For example, it is assumed that the interaction instruction corresponding to the interaction data input by the user is "pausing playing audio XXX", in response to the interaction instruction "pausing playing audio XXX", the electronic device may perform an operation of stopping playing audio XXX, and output "stopped playing audio XXX" through the speaker of the ring, and at the same time, output the vibration signal corresponding to "stopped playing audio XXX" through the vibration motor of the ring.

According to the technical solution disclosed in the embodiments of the present disclosure, the text information corresponding to the interaction data is determined according to the interaction data input by the user through the wearable device, the response information corresponding to the text information is acquired, and then the response information is output. In this way, the response information corresponding to the interaction data is output to the user based on the interaction data input by the user, so that the diversity and flexibility of interaction operations may be increased, the personalized interaction needs of the user may be met, and the user experience may be improved.

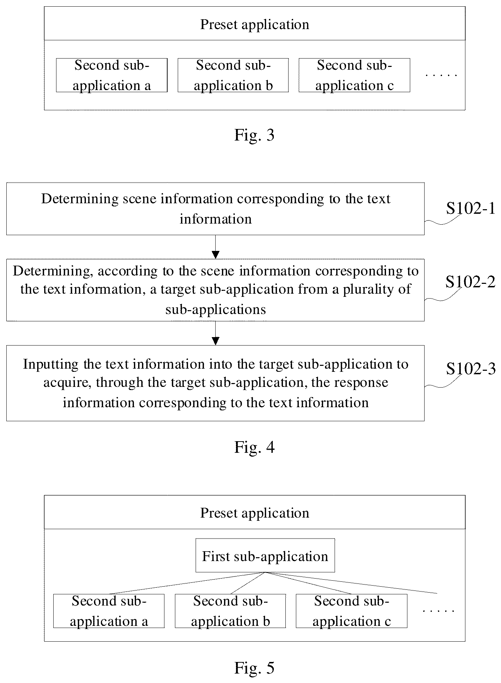

In some embodiments, as shown in Fig. 3, the preset application in the foregoing embodiments may include a plurality of sub-applications, where each of the sub-applications corresponds to different scene information. For example, scene information corresponding to a sub-application XX1 is a daily dialogue scene, scene information corresponding to a sub-application XX2 is an article generation scene, and scene information corresponding to a sub-application XX3 is an audio recognition scene, etc. It should be understood that each of the above sub-applications may be an entry to a large language model. For example, any sub-application may be a professional large language model corresponding to the daily dialogue scene.

On the basis of the preset application structure shown in Fig. 3, as shown in Fig. 4, the above step S102 includes the following steps S102-1 to S102-3:
S102-1: determining scene information corresponding to the text information.
S102-2: determining, according to the scene information corresponding to the text information, a target sub-application from the plurality of sub-applications.
S102-3: inputting the text information into the target sub-application to acquire, through the target sub-application, the response information corresponding to the text information.

In some embodiments, the scene information corresponding to the text information may be determined through the preset application, and the determining the scene information corresponding to the text information may include the following implementation manners:

Implementation manner 1: performing, through the preset application, keyword extraction on the text information, and then determining, according to the extracted keyword, the scene information corresponding to the text information in a pre-established mapping relationship between keywords and scene information.

For example, if the keyword is weather, the corresponding scene information set for the keyword "weather" may be "daily dialogue scene".

Implementation manner 2: determining, through the preset application, the scene information corresponding to the text information in a mapping relationship between the text information, preset phrases and the scene information.

Optionally, in the present disclosure, the similarity between the text information and each of the preset phrases may be calculated, and the preset phrase with the highest similarity is used as a target phrase. Further, the scene information corresponding to the target phrase is determined as the scene information corresponding to the text information.

Implementation manner 3: inputting, through the first sub-application, the text information into a pre-trained machine learning model, so as to understand, through the machine learning model, semantic content of the text information, and then determining the scene information corresponding to the text information according to the semantic content.

It should be noted that the above several implementation manners are only exemplary descriptions of the embodiments of the present disclosure, and are not specific limitations of the present disclosure.

After acquiring the scene information corresponding to the text information, in the present disclosure, a target sub-application corresponding to the scene information may be determined from the plurality of sub-applications according to the scene information. Further, the text information is input into the target sub-application, so as to perform, through the target sub-application, semantic analysis on the text information to generate the response information corresponding to the text information.

The implementation principle of performing, through the target sub-application, semantic analysis on the text information to generate the response information corresponding to the text information is the same or similar to the implementation principle of acquiring, through the preset application, the response information corresponding to the text information, and for the specific implementation process, reference may be made to the part of the foregoing embodiments, which will not be repeated here.

In some embodiments, as shown in Fig. 5, the plurality of sub-applications included in the preset application in the present disclosure may be divided into: a first sub-application and a plurality of second sub-applications, where the first sub-application may be understood as a main sub-application, the second sub-applications may be understood as secondary sub-applications, and each of the second sub-applications corresponds to different scene information. For example, scene information corresponding to a second sub-application YY1 is a daily dialogue scene, scene information corresponding to a second sub-application YY2 is an article generation scene, and scene information corresponding to a second sub-application YY3 is an audio recognition scene, etc. It should be understood that the above first sub-application and each of the second sub-applications may be an entry to a large language model. For example, the first sub-application may be an entry to a general large language model, and any second sub-application may be a professional large language model corresponding to the daily dialogue scene.

Then, in the present disclosure, the acquiring the response information corresponding to the text information through the preset application may optionally be: inputting the text information into the first sub-application to determine, through the first sub-application, the scene information corresponding to the text information; determining, according to the scene information corresponding to the text information, a target second sub-application from the plurality of second sub-applications; and inputting the text information into the target second sub-application to acquire, through the target second sub-application, the response information corresponding to the text information.

In some embodiments, the determining, through the first sub-application, the scene information corresponding to the text information may include the following implementation manners:

Implementation manner 1: performing, through the first sub-application, keyword extraction on the text information, and then determining, according to the extracted keyword, the scene information corresponding to the text information in a pre-established mapping relationship between keywords and scene information.

Implementation manner 2: determining, through the first sub-application, the scene information corresponding to the text information in a mapping relationship between the text information, preset phrases and the scene information.

Implementation manner 3: inputting, through the first sub-application, the text information into a pre-trained machine learning model, so as to understand, through the machine learning model, semantic content of the text information, and then determining the scene information corresponding to the text information according to the semantic content.

It should be noted that the above several implementation manners are only exemplary descriptions of the embodiments of the present disclosure, and are not specific limitations of the present disclosure.

After acquiring the scene information corresponding to the text information, in the present disclosure, a target second sub-application corresponding to the scene information may be determined from the plurality of second sub-applications according to the scene information. Further, the text information is input into the target second sub-application, so as to perform, through the target second sub-application, semantic analysis on the text information to generate the response information corresponding to the text information.

The implementation principle of performing, through the target second sub-application, semantic analysis on the text information to generate the response information corresponding to the text information is the same or similar to the implementation principle of acquiring, through the preset application, the response information corresponding to the text information, and for the specific implementation process, reference may be made to the part of the foregoing embodiments, which will not be repeated here.

That is, in the embodiments of the present disclosure, the scene information corresponding to the text information may be determined, so that the text information is input into the sub-application for processing the scene information according to the scene information in a targeted manner, so that the sub-application may acquire the response information corresponding to the text information more accurately and efficiently; or the scene information corresponding to the text information is determined through the first sub-application in the preset application, so that the text information is input into the second sub-application for processing the scene information according to the scene information in a targeted manner, so that the second sub-application may acquire the response information corresponding to the text information more accurately and efficiently. In this way, a more accurate and personalized response may be provided to the user according to the scene information corresponding to the text information, and the user's interaction experience may be further improved.

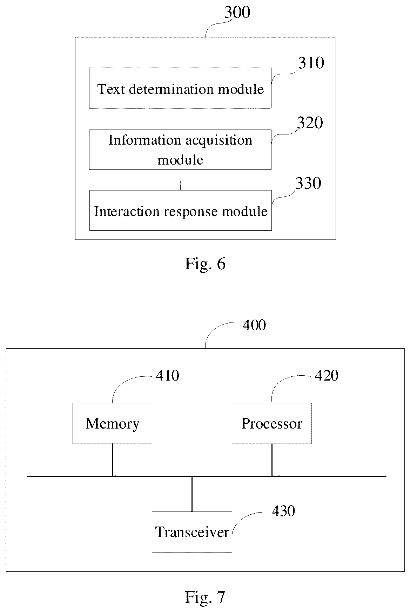

An interaction apparatus according to an embodiment of the present disclosure is described below with reference to Fig. 6. As shown in Fig. 6, the interaction apparatus 300 includes: a text determination module 310, an information acquisition module 320, and an interaction response module 330.

The text determination module 310 is configured to determine, according to interaction data input by a user through a physical device, text information corresponding to the interaction data.

The information acquisition module 320 is configured to acquire response information corresponding to the text information.

The interaction response module 330 is configured to output the response information.

In an optional implementation of the embodiment of the present disclosure, the information acquisition module 320 is further configured to: input the text information into a preset application to acquire, through the preset application, the response information corresponding to the text information.

In an optional implementation of the embodiment of the present disclosure, the information acquisition module 320 is further configured to: perform, through the preset application, semantic analysis on the text information to generate the response information corresponding to the text information.

In an optional implementation of the embodiment of the present disclosure, the preset application includes a plurality of sub-applications, and the information acquisition module 320 is further configured to: determine scene information corresponding to the text information; determine, according to the scene information corresponding to the text information, a target sub-application from the plurality of sub-applications; and input the text information into the target sub-application to acquire, through the target sub-application, the response information corresponding to the text information.

In an optional implementation of the embodiment of the present disclosure, when the physical device is a wearable device, the text determination module 310 is further configured to: determine, according to interaction data input by the user through the wearable device, the text information corresponding to the interaction data.

In an optional implementation of the embodiment of the present disclosure, the interaction data input by the user through the wearable device includes at least one selected from the group consisting of: touch data, button data, pressure-sensitive data and inertial measurement data.

In an optional implementation of the embodiment of the present disclosure, the interaction data input by the user through the wearable device does not include voice data.

In an optional implementation of the embodiment of the present disclosure, the wearable device is a ring.

In an optional implementation of the embodiment of the present disclosure, the wearable device includes a speaker and a vibration motor, and the interaction response module 330 is further configured to: output the response information through the speaker of the wearable device; and/or output, through the vibration motor of the wearable device, a vibration signal corresponding to the response information.

In an optional implementation of the embodiment of the present disclosure, the interaction apparatus 300 further includes: a recording module; and the recording module is configured to generate a dialogue record according to the text information and the response information.

In an optional implementation of the embodiment of the present disclosure, the dialogue record is part of a dialogue segment in a multi-round dialogue record.

It should be understood that the apparatus embodiment may correspond to the foregoing method embodiment. For similar descriptions, reference may be made to the method embodiment of the first aspect. To avoid repetitions, details are not repeated here. Specifically, the apparatus 300 shown in Fig. 6 may execute the method embodiment corresponding to Fig. 1, and the foregoing and other operations and/or functions of each module in the apparatus 300 are respectively intended to implement corresponding procedures of each method in Fig. 1, which are not repeated here for the sake of brevity.

The apparatus 300 of the embodiments of the present disclosure is described above with reference to the drawings from the perspective of a functional module. It should be understood that the functional module may be implemented in the form of hardware, or may be implemented by instructions in the form of software, or may be implemented by a combination of hardware and a software module. Specifically, the steps in the method embodiment of the first aspect in the embodiments of the present disclosure may be completed by a hardware integrated logic circuit in a processor and/or the instructions in the form of the software. The steps of the method of the first aspect disclosed in the embodiments of the present disclosure may be directly embodied to be completed by a hardware decoding processor or by a combination of hardware in the decoding processor and a software module. Optionally, the software module may be located in a mature storage medium in the art, such as a random access memory, a flash memory, a read-only memory, a programmable read-only memory, an electrically erasable programmable memory, or a register. The storage medium is located in a memory. The processor reads information in the memory, and completes the steps in the foregoing method embodiment of the first aspect in combination with the hardware of the processor.

Fig. 7 is a schematic block diagram of an electronic device provided by an embodiment of the present disclosure. As shown in Fig. 7, the electronic device may include: a memory 410 and a processor 420, where the memory 410 is configured to store a computer program and transmit the program code to the processor 420. In other words, the processor 420 may call and run the computer program from the memory 410 to implement the interaction method according to the first aspect in the embodiments of the present disclosure.

For example, the processor 420 may be configured to perform the interaction method according to the first aspect described above according to instructions in the computer program.

In some embodiments, the interaction method includes: determining, according to interaction data input by a user through a physical device, text information corresponding to the interaction data; acquiring response information corresponding to the text information; and outputting the response information.

In some embodiments, the acquiring the response information corresponding to the text information includes: inputting the text information into a preset application to acquire, through the preset application, the response information corresponding to the text information.

In some embodiments, the acquiring, through the preset application, the response information corresponding to the text information includes: performing, through the preset application, semantic analysis on the text information to generate the response information corresponding to the text information.

In some embodiments, the preset application includes a plurality of sub-applications, and the inputting the text information into the preset application to acquire, through the preset application, the response information corresponding to the text information includes: determining scene information corresponding to the text information; determining, according to the scene information corresponding to the text information, a target sub-application from the plurality of sub-applications; and inputting the text information into the target sub-application to acquire, through the target sub-application, the response information corresponding to the text information.

In some embodiments, when the physical device is a wearable device, the determining, according to interaction data input by the user through the physical device, text information corresponding to the interaction data includes: determining, according to interaction data input by the user through the wearable device, the text information corresponding to the interaction data.

In some embodiments, the interaction data input by the user through the wearable device includes at least one selected from the group consisting of: touch data, button data, pressure-sensitive data, and inertial measurement data.

In some embodiments, the interaction data input by the user through the wearable device does not include voice data.

In some embodiments, the wearable device is a ring.

In some embodiments, the wearable device includes a speaker and a vibration motor, and the outputting the response information includes: outputting the response information through the speaker of the wearable device; and/or outputting, through the vibration motor of the wearable device, a vibration signal corresponding to the response information.

In some embodiments, the method further includes: generating a dialogue record according to the text information and the response information.

In some embodiments, the dialogue record is part of a dialogue segment in a multi-round dialogue record.

In some embodiments of the present disclosure, the processor 420 may include, but is not limited to: a general-purpose processor, a digital signal processor (Digital Signal Processor, DSP), an application specific integrated circuit (Application Specific Integrated Circuit, ASIC), a field programmable gate array (Field Programmable Gate Array, FPGA) or other programmable logic devices, a discrete gate or transistor logic device, a discrete hardware component, etc.

In some embodiments of the present disclosure, the memory 410 includes, but is not limited to: a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), which is used as an external cache. By way of example but not restrictive description, many forms of RAMs may be used, such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synch link dynamic random access memory (synch link DRAM, SLDRAM), and a direct rambus random access memory (Direct Rambus RAM, DR RAM).

In some embodiments of the present disclosure, the computer program may be divided into one or more program modules, and the one or more program modules are stored in the memory 410 and executed by the processor 420 to implement the interaction method provided by the present disclosure. The one or more program modules may be a series of computer program instruction segments capable of implementing specific functions, and the instruction segments are used for describing an execution process of the computer program in the electronic device.

As shown in Fig. 7, the electronic device 400 may further include: a transceiver 430, which may be connected to the processor 420 or the memory 410.

The processor 420 may control the transceiver 430 to communicate with other devices, specifically, to send information or data to other devices or to receive information or data sent by other devices. The transceiver 430 may include a transmitter and a receiver. The transceiver 430 may further include an antenna, and there may be one or more antennas.

It should be understood that the components of the electronic device are connected to each other through a bus system. **In** addition to a data bus, the bus system further includes a power bus, a control bus, and a status signal bus.

The present disclosure further provides a non-transitory computer storage medium having a computer program stored thereon, where the computer program, when executed by a computer, causes the computer to perform the interaction method according to the first aspect described above.

In some embodiments, the interaction method includes: determining, according to interaction data input by a user through a physical device, text information corresponding to the interaction data; acquiring response information corresponding to the text information; and outputting the response information.

**In** some embodiments, the acquiring the response information corresponding to the text information includes: inputting the text information into a preset application to acquire, through the preset application, the response information corresponding to the text information.

In some embodiments, the acquiring, through the preset application, the response information corresponding to the text information includes: performing, through the preset application, semantic analysis on the text information to generate the response information corresponding to the text information.

In some embodiments, the preset application includes a plurality of sub-applications, and the inputting the text information into the preset application to acquire, through the preset application, the response information corresponding to the text information includes: determining scene information corresponding to the text information; determining, according to the scene information corresponding to the text information, a target sub-application from the plurality of sub-applications; and inputting the text information into the target sub-application to acquire, through the target sub-application, the response information corresponding to the text information.

In some embodiments, when the physical device is a wearable device, the determining, according to interaction data input by the user through the physical device, text information corresponding to the interaction data includes: determining, according to interaction data input by the user through the wearable device, the text information corresponding to the interaction data.

In some embodiments, the interaction data input by the user through the wearable device includes at least one selected from the group consisting of: touch data, button data, pressure-sensitive data, and inertial measurement data.

In some embodiments, the interaction data input by the user through the wearable device does not include voice data.

In some embodiments, the wearable device is a ring.

In some embodiments, the wearable device includes a speaker and a vibration motor, and the outputting the response information includes: outputting the response information through the speaker of the wearable device; and/or outputting, through the vibration motor of the wearable device, a vibration signal corresponding to the response information.

In some embodiments, the method further includes: generating a dialogue record according to the text information and the response information.

In some embodiments, the dialogue record is part of a dialogue segment in a multi-round dialogue record.

The present disclosure further provides a computer program product including program instructions, where the program instructions, when executed on an electronic device, cause the electronic device to perform the interaction method according to the first aspect described above.

In some embodiments, the interaction method includes: determining, according to interaction data input by a user through a physical device, text information corresponding to the interaction data; acquiring response information corresponding to the text information; and outputting the response information.

In some embodiments, the acquiring the response information corresponding to the text information includes: inputting the text information into a preset application to acquire, through the preset application, the response information corresponding to the text information.

In some embodiments, the acquiring, through the preset application, the response information corresponding to the text information includes: performing, through the preset application, semantic analysis on the text information to generate the response information corresponding to the text information.

In some embodiments, the preset application includes a plurality of sub-applications, and the inputting the text information into the preset application to acquire, through the preset application, the response information corresponding to the text information includes: determining scene information corresponding to the text information; determining, according to the scene information corresponding to the text information, a target sub-application from the plurality of sub-applications; and inputting the text information into the target sub-application to acquire, through the target sub-application, the response information corresponding to the text information.

In some embodiments, when the physical device is a wearable device, the determining, according to interaction data input by the user through the physical device, text information corresponding to the interaction data includes: determining, according to interaction data input by the user through the wearable device, the text information corresponding to the interaction data.

In some embodiments, the interaction data input by the user through the wearable device includes at least one selected from the group consisting of: touch data, button data, pressure-sensitive data, and inertial measurement data.

In some embodiments, the interaction data input by the user through the wearable device does not include voice data.

In some embodiments, the wearable device is a ring.

In some embodiments, the wearable device includes a speaker and a vibration motor, and the outputting the response information includes: outputting the response information through the speaker of the wearable device; and/or outputting, through the vibration motor of the wearable device, a vibration signal corresponding to the response information.

In some embodiments, the method further includes: generating a dialogue record according to the text information and the response information.

In some embodiments, the dialogue record is part of a dialogue segment in a multi-round dialogue record.

When implemented in software, all or part of the embodiments may be implemented in the form of a computer program product. The computer program product includes one or more computer instructions. When the computer program instructions are loaded and executed on a computer, all or part of the processes or functions according to the embodiments of the present disclosure are generated. The computer may be a general-purpose computer, a dedicated computer, a computer network, or other programmable apparatuses. The computer instructions may be stored in a computer-readable storage medium, or may be transmitted from one computer-readable storage medium to another computer-readable storage medium. For example, the computer instructions may be transmitted from one website, computer, server or data center to another website, computer, server or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (DVD)), a semiconductor medium (for example, a solid state disk (SSD)), etc.

Those of ordinary skill in the art may realize that the modules and algorithm steps of various examples described in conjunction with the embodiments disclosed herein may be implemented in electronic hardware or a combination of computer software and electronic hardware. Whether these functions are performed in hardware or software depends on the specific application and design constraints of the technical solution. A person skilled in the art may implement the described functions by using different methods for each particular application, but such implementation should not be considered as going beyond the scope of the present disclosure.

In the several embodiments provided by the present disclosure, it should be understood that the disclosed systems, apparatuses and methods may be implemented in other ways. For example, the apparatus embodiments described above are only schematic. For example, the module division is only logical function division and may be divided by other ways in the actual implementation. For example, the various elements or components may be combined or integrated in another system or certain features may be omitted, or not implemented. In addition, other items shown or discussed as coupled, directly coupled or communicating with each other may be indirectly coupled or communicating through some interface, apparatus or device whether electrically, mechanically, or otherwise.

The modules described as separate components may be or may not be physically separate, and components displayed as modules may be or may not be physical modules, that is, they may be located in one place or distributed to multiple network units. Some or all of the modules may be selected according to actual needs to achieve the objectives of the solutions of the embodiments. For example, the functional modules in the embodiments of the present disclosure may be integrated into one processing module, each of the modules may exist physically alone, or two or more modules may be integrated into one module.

In the embodiments of the present disclosure, the term "module" or "unit" refers to a computer program or a part of a computer program with a predetermined function, and works with other related parts to achieve a predetermined goal, which may be implemented in whole or in part by using software, hardware (such as a processing circuit or a memory), or a combination thereof. Similarly, one processor (or multiple processors or memories) may be used to implement one or more modules or units. In addition, each module or unit may be a part of an overall module or unit that contains the functions of the module or unit.

The above descriptions are only specific embodiments of the present disclosure, but are not intended to limit the scope of protection of the present disclosure. Any variation or replacement readily figured out by a person skilled in the art within the technical scope disclosed in the present disclosure shall fall within the scope of protection of the present disclosure. Therefore, the scope of protection of the present disclosure shall be subject to the scope of protection of the claims.

## Claims

1. An interaction method, comprising:
determining, according to interaction data input by a user through a physical device, text information corresponding to the interaction data;
acquiring response information corresponding to the text information; and
outputting the response information.

2. The method of claim 1, wherein the acquiring response information corresponding to the text information comprises:
inputting the text information into a preset application and acquiring, through the preset application, the response information corresponding to the text information.

3. The method of claim 2, wherein the acquiring, through the preset application, the response information corresponding to the text information comprises:
performing, through the preset application, semantic analysis on the text information to generate the response information corresponding to the text information.

4. The method of claim 2, wherein the preset application comprises a plurality of sub-applications, and the inputting the text information into a preset application and acquiring, through the preset application, the response information corresponding to the text information comprises:
determining scene information corresponding to the text information;
determining, according to the scene information corresponding to the text information, a target sub-application from the plurality of sub-applications; and
inputting the text information into the target sub-application to acquire, through the target sub-application, the response information corresponding to the text information.

5. The method of any one of claims 1-4, wherein the physical device is a wearable device, and the determining, according to interaction data input by the user through a physical device, text information corresponding to the interaction data comprises:
determining, according to interaction data input by the user through the wearable device, the text information corresponding to the interaction data.

6. The method of claim 5, wherein the interaction data input by the user through the wearable device comprises at least one selected from the group consisting of: touch data, button data, pressure-sensitive data, and inertial measurement data.

7. The method of claim 5, wherein the interaction data input by the user through the wearable device does not comprise voice data.

8. The method of claim 5, wherein the wearable device is a ring.

9. The method of claim 5, wherein the wearable device comprises a speaker and a vibration motor, and the outputting the response information comprises:
outputting the response information through the speaker of the wearable device; and/or
outputting, through the vibration motor of the wearable device, a vibration signal corresponding to the response information.

10. The method of any one of claims 1-9, further comprising:
generating a dialogue record according to the text information and the response information.

11. The method of claim 10, wherein the dialogue record is a partial dialogue segment in a multi-round dialogue record.

12. An interaction apparatus (300), comprising:
a text determination module (310), configured to determine, according to interaction data input by a user through a physical device, text information corresponding to the interaction data;
an information acquisition module (320), configured to acquire response information corresponding to the text information; and
an interaction response module (330), configured to output the response information.

13. An electronic device, comprising:
a processor and a memory,
wherein the memory is configured to store a computer program, and the processor is configured to execute the computer program stored in the memory to perform the interaction method of any one of claims 1 to 11.

14. A non-transitory computer-readable storage medium, configured to store a computer program, wherein the computer program, when executed by a processor, causes the interaction method of any one of claims 1 to 11 to be implemented.
